# FASCICULE DE BREVET EUROPEEN

(11) **EP 3 344 481 B1**
(45) Date de publication et mention de la délivrance du brevet: **08.12.2021**
(21) Numéro de dépôt: 16760504.7
(22) Date de dépôt: 05.09.2016
(51) Int. Cl.: B60J 5/10

(54) **PROCÉDÉ DE FABRICATION D'UN PANNEAU D'UN HAYON DE VÉHICULE ET PANNEAU ASSOCIÉ**
VERFAHREN ZUR HERSTELLUNG EINER PLATTE EINER FAHRZEUGHECKKLAPPE UND ZUGEHÖRIGE PLATTE
METHOD FOR MANUFACTURING A PANEL OF A VEHICLE TAILGATE AND ASSOCIATED PANEL

(30) Priorité: 03.09.2015 FR 1558177
(43) Date de publication de la demande: 11.07.2018
(73) Titulaire: Flex-N-Gate France, 25405 Audincourt (FR)
(72) Inventeur: IMBERT, Didier, 25460 Etupes (FR)
(74) Mandataire: Lavoix
(86) Numéro de dépôt international: PCT/EP2016/070885
(87) Numéro de publication internationale: WO 2017/037297

(56) Documents cités:
- EP-A1- 1 927 453
- WO-A1-2009/143627
- FR-A1- 3 009 705
- US-A1- 2012 248 814

## Description

La présente invention concerne un procédé de fabrication d'un panneau d'un hayon de véhicule

En outre, la présente invention concerne un panneau d'un hayon de véhicule automobile.

Un hayon, notamment un hayon arrière, est destiné à obturer une ouverture de coffre aménagée dans une caisse de véhicule automobile. Le hayon est mobile autour d'un axe défini par des charnières entre une position ouverte dans laquelle il libère l'accès au coffre du véhicule automobile, et une position fermée dans laquelle il obture l'ouverture de coffre. Un tel hayon est connu par exemple du document WO 2009/143627 A1.

Le panneau est, par exemple, la doublure intérieure structurelle du hayon. Le panneau est recouvert d'une peau extérieure d'aspect.

Il est connu de réaliser une partie du panneau en matière thermoplastique de façon à réduire la masse du panneau.

Le panneau du hayon est relié à la caisse du véhicule automobile par divers organes de liaisons, par exemple des charnières et/ou des équilibreurs. Les organes de liaison sont très sollicités et susceptibles d'appliquer des efforts importants sur le panneau lors de différentes situations de vie du hayon de véhicule. Les situations de vie sont des conditions normales ou extrêmes d'utilisation du hayon. Par exemple, la situation de vie du hayon du véhicule est un freinage du véhicule, un claquage du hayon, un surclaquage du hayon, un choc du véhicule à petite vitesse, un choc du véhicule à grande vitesse, une sollicitation du hayon décrite dans la norme ECE R11, un coup de vent sur le hayon, une torsion du hayon, une flexion du hayon, un effort lors du montage de composants constitutifs du hayon monté sur le véhicule en position ouverte, un effort de poussée d'équipements reliant le hayon au reste du véhicule. Les dits équipements sont par exemple un joint d'étanchéité du hayon, ou une serrure de fermeture du hayon, exerçant une contrainte lorsque le hayon est fermé ou des vérins de l'équilibreur du hayon.

Ces efforts, par exemple de torsion, de flexion ou de poussée, entrainent des contraintes mécaniques relativement importantes dans le panneau qui ont tendance à détériorer la partie en matière thermoplastique du panneau. Les contraintes des différentes situations de vie présentent des grandeurs différentes et des orientations différentes pouvant détériorer le panneau. Au cours d'un freinage ou d'un choc à grande vitesse, ces efforts sont multipliés par la décélération subie par le véhicule. Or, une rupture du panneau serait particulièrement dangereuse car le corps du panneau ou une partie du panneau et/ou du hayon risquerait de se désolidariser de la caisse de véhicule et de percuter des passagers ou un autre véhicule. Pour respecter la norme ECE R11, le risque d'une telle rupture doit être réduit.

Il est connu, de limiter ces risques en intégrant des renforts dans le panneau, notamment des renforts métalliques s'étendant dans la partie thermoplastique au moins entre les organes de liaison. Cependant, le poids d'un tel panneau reste important.

Un des buts de la présente invention est de fournir un panneau de hayon de véhicule présentant une masse réduite mais ayant des caractéristiques structurelles permettant une bonne résistance mécanique lors de situations de vie du hayon du véhicule.

A cet effet, l'invention a notamment pour objet un procédé du type précité tel que défini par la partie caractérisante de la revendication 1.

Le procédé selon l'invention peut comporter, en outre, une ou plusieurs des caractéristiques des revendications 2 à 9, prises seules ou selon toutes combinaisons techniquement envisageables.

L'invention concerne également un panneau d'un hayon de véhicule automobile comportant tel que défini par la revendication 10 .

L'invention sera mieux comprise à la lecture de la description qui va suivre, donnée uniquement à titre d'exemple et faite en se référant aux figures annexées, parmi lesquelles :
- la figure 1 est une vue de face d'un panneau d'un hayon de véhicule selon l'invention ;
- la figure 2 est une vue de détail d'une partie du panneau de la figure 1 ;
- la figure 3 est une représentation schématique du procédé de fabrication du panneau de la figure 1.

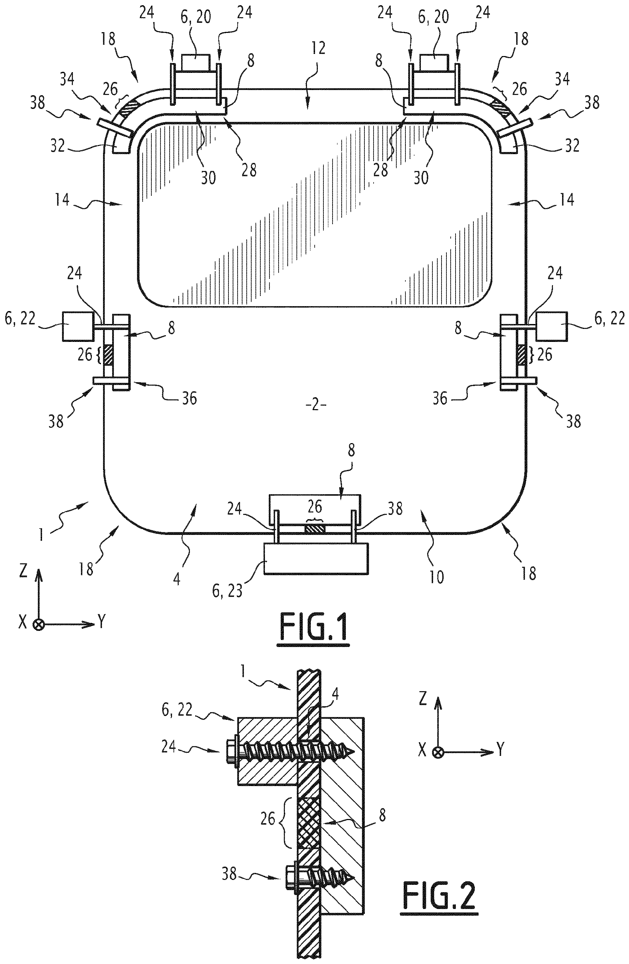

Un panneau 1 d'un hayon de véhicule automobile est représenté sur la figure 1. Le panneau 1 forme une partie structurelle du hayon, destinée à être associée à une peau extérieure d'aspect de ce hayon. Le panneau 1 est notamment une doublure intérieure pour un hayon arrière.

Le panneau 1 d'un hayon comporte un corps 2 délimité à sa périphérie par une bordure 4, au moins un organe de liaison 6 par l'intermédiaire duquel le panneau 1 est relié à la caisse du véhicule automobile et au moins un renfort 8 de la bordure 4 au niveau de l'organe de liaison 6.

On définit un repère orthonormé par rapport au panneau 1 comprenant : un axe longitudinal X perpendiculaire au corps 2 du panneau 1, un axe transversal Y et un axe d'élévation Z.

Au moins la bordure 4 du corps 2 est réalisée en matière thermoplastique. Par définition, un matériau thermoplastique est un matériau à base de polymère qui peut être mis en forme, à une température supérieure à sa température de transition vitreuse ou à sa température de fusion. La mise en forme des matériaux thermoplastique est réversible, contrairement à la mise en forme d'un matériau thermodurcissable.

Le matériau thermoplastique comprend par exemple un des polymères suivants : Téréphtalate de polyéthylène (PET), Polyéthylène haute densité (HDPE), Chlorure de polyvinyle (PVC), Polyéthylène basse densité (LDPE), Polypropylène (PP), Polystyrène (PS), acrylonitrile butadiène styrène (ABS), polycarbonate (PC), le polyamide (PA), polyoxyméthylène (POM) et Polyméthacrylate de Méthyle (PMMA). Dans un exemple, le matériau thermoplastique est renforcé avec des charges minérales telles que du talc ou avec des fibres telles que des fibres de carbones ou des fibres de verre.

Le module d'Young de la matière thermoplastique est, par exemple, compris entre 1500 MPa et 10000 MPa.

Le reste du corps 2 du panneau 1 est avantageusement aussi en matière thermoplastique. De préférence l'ensemble du corps 2 est venu de matière avec la bordure 4.

La bordure 4 présente la forme d'un cadre comprenant, une traverse inférieure 10, une traverse supérieure 12 et deux montants latéraux 14 et reliant chacun une extrémité latérale respective de la traverse supérieure 12 avec une extrémité latérale respective de la traverse inférieure 10. La bordure 4 présente quatre angles 18.

Avantageusement, le panneau 1 comprend une pluralité d'organes de liaison 6, le panneau 1 comportant un renfort 8 différent pour chaque organe de liaison. 6 Par exemple, l'organe de liaison 6 est une charnière de liaison 20 du hayon au véhicule, une rotule d'équilibreur 22 du hayon du véhicule, ou un dispositif d'accrochage 23 d'une serrure du hayon du véhicule.

Dans l'exemple représenté, le panneau 1 comporte cinq organes de liaisons 6 et cinq renforts 8 associés. Deux organes de liaison 6 sont des charnières de liaison 20 du hayon au véhicule disposées sur la traverse supérieure 12 de la bordure 4. Les charnières de liaison 20 du hayon au véhicule permettent la mobilité du panneau 1 autour d'un axe transversal défini par ces charnières entre une position fermée dans laquelle le panneau 1 obture une ouverture de coffre ménagée dans la caisse, et une position ouverte dans laquelle l'ouverture de coffre est dégagée. Deux autres organes de liaison 6 sont des rotules d'équilibreurs 22 disposées sur chaque montant latéral 14 de la bordure 4 de part et d'autre du panneau 1. Chaque rotule d'équilibreur 22 est destinée à être reliée à une extrémité d'un vérin de hayon. Les vérins de hayon sont destinés à assister l'ouverture du hayon et à maintenir le hayon en position ouverte. Un autre organe de liaison 6 est un dispositif d'accrochage 23 d'une serrure disposé sur la traverse inférieure 10 de la bordure 4. Le dispositif d'accrochage 23 de la serrure permet le verrouillage du hayon en position fermée.

On appelle « longueur de l'organe de liaison 6 », sa dimension selon l'axe d'appui contre le panneau 1. Ainsi, la longueur d'une charnière 20 disposée sur la traverse supérieure est mesurée selon l'axe transversal Y. La longueur d'une rotule d'équilibreur 22 disposée le long d'un montant latéral 14 est mesurée selon l'axe d'élévation Z.

Chaque organe de liaison 6 est fixé à la bordure 4 par au moins un élément principal de fixation 24.

Dans l'exemple représenté chaque charnière de liaison 20 est fixée à la bordure 4 par deux éléments principaux de fixation 24 s'étendant selon la direction d'élévation Z.

Dans l'exemple représenté, chaque rotule d'équilibreur 22 est fixée à la bordure 4 par un élément principal de fixation 24 s'étendant selon la direction transversale Y.

En outre, chaque organe de liaison 6 est destiné à être fixé au véhicule. Chaque organe de liaison 6 est soumis à des efforts lors d'au moins une situation de vie du hayon du véhicule.

La situation de vie est choisie parmi des conditions de freinage du véhicule, de claquage du hayon, de surclaquage du hayon, de choc du véhicule à petite vitesse, de choc du véhicule à grande vitesse, de sollicitation du hayon décrite dans la norme ECE R11, de coup de vent sur le hayon, de torsion du hayon, de flexion du hayon, d'effort lors du montage de composants constitutifs du hayon monté sur le véhicule en position ouverte, et des conditions d'effort de poussée d'équipements reliant le hayon au reste du véhicule, les dits équipements étant un joint d'étanchéité du hayon, une serrure de fermeture du hayon, ou un équilibreur du hayon.

Pour chaque organe de liaison 6, la bordure 4 présente au moins une zone de contraintes mécaniques maximales 26 engendrées dans la bordure 4 au voisinage de l'organe de liaison 6 lors d'une situation de vie du hayon du véhicule, comme cela sera décrit par la suite.

Par « au voisinage », on entend à une distance inférieure à 500 mm de l'organe de liaison 6.

Par exemple, la zone de contraintes mécaniques maximales 26 s'étend à une distance inférieure à 300 mm d'un élément principal de fixation.

Le renfort 8 est avantageusement métallique. Le renfort 8 présente un module d'Young supérieur à 200 000 MPa.

Dans une variante, le renfort 8 est de nature composite renforcé par des fibres de verre ou de carbone, avec une matière en matière plastique thermodurcissable ou thermoplastique.

Chaque renfort 8 est fixé à la bordure 4 et à l'organe de liaison 6 associé à une position déterminée. La forme et de la position du renfort 8 sont telles que le renfort 8 traverse la zone de contraintes mécaniques maximales 26 engendrées dans la bordure 4 au voisinage de l'organe de liaison lors d'une situation de vie du hayon du véhicule, notamment lors d'un freinage au cours d'un choc à grande vitesse.

Avantageusement, le renfort 8 est creux, c'est-à-dire qu'il présente au moins une cavité, notamment délimitée par au moins deux parois. Par exemple, le renfort 8 est un tube. En variante, le renfort 8 présente une section en U, une section en Oméga, une section en carré, ou autre. En variante, le renfort 8 est plat. Dans certains exemples, le renfort 8 présente des bords tombés. Ainsi, le renfort 8 présente une forme tridimensionnelle adaptée pour présenter des caractéristiques structurelles optimales.

Dans l'exemple, la zone de contraintes mécaniques maximales 26 associée à chaque charnière de liaison 6 est située dans un angle 18 supérieur de la bordure 4. Le renfort 8 associé à chaque charnière de liaison 6, noté 28, présente une forme coudée traversant la zone de contraintes mécaniques maximales 26. Par « forme coudée », on entend que le renfort 8 présente une forme de L comportant un premier bras 30 étendu selon la direction transverse Y et un deuxième bras 32 étendu selon la direction d'élévation Z d'un montant latéral 14 et une portion de jonction 34 entre les deux bras 30, 32. Au moins un des deux bras 30, 32 du renfort 8 s'étend le long d'un organe de liaison 6.

Par exemple, les renforts 8, placés sur la traverse supérieure 12 en regard d'un organe de liaison 6 présentent une forme coudée, chaque bras 30, 32 présentant une longueur inférieure ou égale à 500 mm.

Dans l'exemple, la zone de contraintes mécaniques maximales 26 associée à chaque rotule 22 est située dans un montant latéral 14 de la bordure 4. Le renfort 8 associé à une rotule 22, noté 36, présente une forme allongée traversant la zone de contraintes mécaniques maximales 26. Par exemple dans les montants latéraux 14 les renforts 8 présentent une longueur strictement inférieure à 600 mm.

Le renfort 8 est fixé à l'organe de liaison 6 par l'élément principal de fixation 24 qui fixe l'organe de liaison 6 à la bordure 4.

Chaque renfort 8 est fixé à la bordure 4 à la fois par l'élément principal de fixation 24 et par un élément additionnel de fixation 38. L'élément principal de fixation 24 et l'élément additionnel de fixation 38 sont disposés de part et d'autre de la zone de contraintes mécaniques maximales 26. L'élément additionnel de fixation 38 s'étend par exemple parallèlement à l'élément principal de fixation 24. En variante, par exemple pour les renforts coudés, la direction de l'élément additionnel de fixation 38 présente avec la direction de l'élément principal de fixation 24 un angle compris entre 5 ° et 90 °, notamment égale à 45 °.

Telle que représenté sur la figure 2, une partie de la bordure 4 est interposée entre le renfort 8 et l'organe de liaison 6. Par exemple, le renfort 8 est taraudé et l'organe de liaison 6 est taraudé et l'élément principal de fixation 24 comporte une tige filetée à ses extrémités de sorte que l'élément principal de fixation 24 soit vissé à la fois dans le renfort 8 et dans l'organe de liaison 6 mais pas dans la partie de la bordure 4 interposée entre le renfort 8 et l'organe de liaison 6. Ainsi, la partie de la bordure 4 interposée ne subit pas de contraintes de la fixation. L'élément additionnel de fixation 38 comprend par exemple un écrou.

En variante, l'organe de liaison 6 est non taraudé mais percé avec un trou permettant le passage de l'élément de fixation 24.

Les efforts transmis à l'organe de liaison 6 par le véhicule se transmettent au renfort 8 par l'élément principal de fixation 24 sans fragiliser la partie de la bordure 4 interposée.

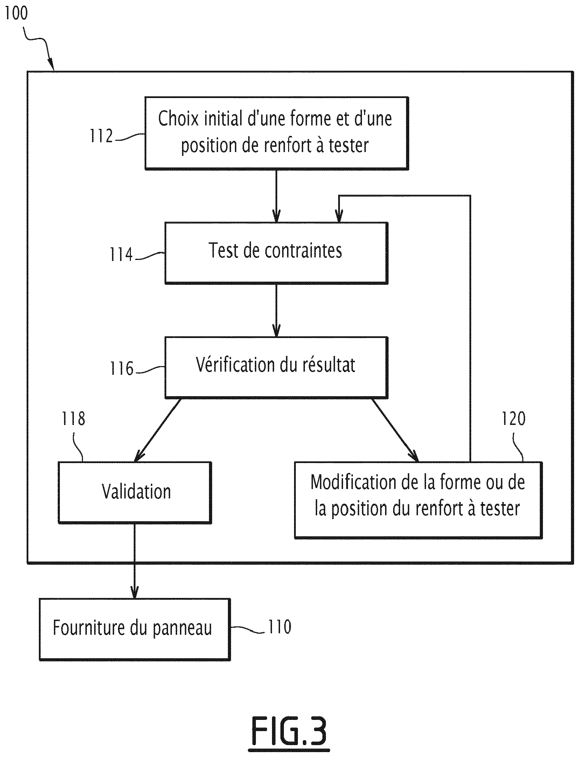

Un procédé de fabrication du panneau précédemment décrit est maintenant décrit en référence à la figure 3.

Le procédé comprend les étapes suivantes :
- détermination (étape 100) pour chaque organe de liaison 6, d'une zone de contraintes mécaniques maximales 26 engendrées dans la bordure 4 au voisinage de l'organe de liaison 6 lors d'une situation de vie du hayon du véhicule et de détermination pour chaque organe de liaison, de la forme et de la position du renfort 8 en fonction de la zone de contraintes mécaniques maximales 26 déterminée, tel que le renfort 8 traverse la zone de contraintes mécaniques maximales 26,
- fourniture (étape 110) du panneau 1 comprenant un corps 2 délimité à sa périphérie par une bordure 4, la bordure 4 du corps 2 étant réalisé en matière thermoplastique, chaque organe de liaison 6 étant fixé à la bordure 4 et destiné à être fixé au véhicule, et pour chaque organe de liaison un renfort 8 présentant la forme déterminé est fixé à la bordure 4 et à l'organe de liaison 6 à la position déterminée.

Avant de fournir le panneau, le procédé comprend une étape de détermination 100 des zones de contraintes mécaniques maximales 26 engendrées dans la bordure 4 au voisinage des organes de liaison 6 lors d'une situation de vie du hayon du véhicule, et de la forme et de la position de chaque renfort 8.

Avantageusement, les autres paramètres du panneau 1 comme la dimension du corps 2, de la bordure 4, le type de thermoplastique, le nombre, le type et la position des organes de liaisons 6 sur la bordure 4, la position et la forme des éléments principaux de fixation 24, la formes des éléments additionnels de fixation 38 sont déterminées avant la mise en œuvre du procédé.

Par exemple, la détermination des zones de contraintes mécaniques maximales 26 est mise en oeuvre pour une situation de choc à grande vitesse.

Avantageusement, la détermination des zones de contraintes mécaniques maximales est mise en oeuvre pour plusieurs situations de vie.

Avantageusement, chaque situation de vie du hayon utilisée pour la détermination présente des paramètres statiques et dynamiques connus. Par exemple, lorsque la situation de vie est un choc à grande vitesse, la décélération est connue.

Pour l'étape de détermination 100, une forme initiale et une position initiale de renfort 8 à tester sont choisies lors d'une sous-étape de choix initial 112.

Dans un exemple, la longueur du renfort 8 à tester initialement choisie est sensiblement égale à la longueur de l'organe de liaison 6 associé.

Dans un exemple, les formes et les positions du renfort 8 à tester choisies lors du choix initial 112 sont les formes et positions de renfort 8 qui seraient utilisés dans le cas d'une bordure 4 en matériau thermodurcissable.

Par exemple, pour un renfort 8, 36 de rotule d'équilibreur 22, lors du choix initial 112, le renfort 8 à tester est positionné sur un montant latéral 14 le long de la rotule d'équilibreur 22, et présente une forme allongée avantageusement de 50 mm.

Par exemple, pour un renfort 8, 28 de charnière 20, lors du choix initial 112, le renfort 8 à tester est positionné sur la traverse supérieure 12 le long de la charnière 20, et présente une forme allongée, avantageusement de 100 mm. En variante, lors du choix initial 112, le renfort 8 à tester est positionné dans un angle 18 et présente une forme coudée dont un bras 30 s'étendant le long de la charnière 20 présente la longueur de la charnière 20.

Après le choix initial 112, la position de l'élément additionnel de fixation 38 est déterminée à partir de la position et de la forme du renfort 8 à tester.

Après ce choix initial 112, le procédé comprend une sous-étape de test de contrainte 114 permettant à partir de la forme de renfort 8 à tester de déterminer une zone de contraintes mécaniques maximales 26 engendrées dans la bordure 4 au voisinage de l'organe de liaison 6 lors d'au moins une situation de vie du hayon de véhicule.

Avantageusement ce test 114 est réalisé en simulation numérique. Ce test 114 consiste par exemple à appliquer un choc dynamique à 30 G dans toutes les directions au panneau 1 retenu par ses organes de fixation 6. Par exemple, la détermination d'une zone de contraintes mécaniques maximales 26 lors d'une situation de vie du hayon du véhicule est effectuée par des tests décrits dans la norme ECE R11. Avantageusement, la version de la norme ECE R11 utilisée est la version ECE R11 en vigueur, par exemple la norme ECE R11.03.

En variante ou en complément, un prototype est fabriqué pour réaliser le test 114 physiquement, en condition de laboratoire reproduisant les conditions de la situation de vie.

Au cours du test 114, les contraintes sont mesurées au voisinage de chaque organe de liaison 6 lors d'une situation de vie du hayon. Les zones de contraintes mécaniques maximales 26 engendrées 26 sont cartographiées. Par exemple, les zones de contraintes mécaniques maximales 26 sont les zones de la bordure 4 où la contrainte mesurée lors du test 114 est supérieur à un seuil prédéterminé. La fatigue dans la zone de contrainte mécanique maximale 26 est, par exemple, déterminée par une simulation à partir des valeurs de contrainte déterminée. Un seuil de fatigue prédéterminé est donné. Par exemple, pour une fatigue supérieure au seuil, le matériau présente un défaut, comme une amorce de fissure visible à l'œil nu.

A l'issu de la sous-étape de test de contrainte 114, le procédé comprend une sous-étape de vérification du résultat 116.

Lors de la sous-étape de vérification 116, si, à l'issu de la sous-étape de test de contrainte 114, la zone de contraintes mécaniques maximales 26 déterminée ne présente pas de zones de fragilité, la forme et la position du renfort 8 à tester est validée, dans une sous-étape de validation 118. Cette forme et cette position de renfort 8 déterminées seront utilisées pour la fabrication du panneau 1. Une zone de fragilité est une zone présentant une fissure, une casse ou une fatigue supérieure au seuil de fatigue prédéterminé.

Lors de la sous-étape de vérification 116, si à l'issu de la sous-étape de test de contrainte 114, la zone de contraintes mécaniques maximales 26 présente une zone de fragilité, la forme ou la position de renfort 8 à tester est modifiée lors d'une sous-étape de modification 120. La modification du renfort 8 dépend du résultat du test. Par exemple, si une zone de fragilité apparaît dans un angle 18 de la bordure 4, la forme du renfort 8 est modifiée pour que le renfort 8 présente une forme coudée positionnée sur l'angle 18 et traversant la zone de fragilité. En variante, le renfort 8, est avantageusement allongé pour traverser la zone de fragilité. Après la modification, la position de l'élément additionnel de fixation 38 est déterminée à partir de la nouvelle position et de la nouvelle forme du renfort 8 à tester.

Tant que la forme de renfort 8 à tester n'est pas validée, la sous-étape de test de contrainte 114 et la sous-étape de vérification du résultat 116 sont itérées. Ceci permet de réaliser le panneau 1 avec une forme de renfort 8 satisfaisante pour résister aux contraintes de différentes situations de vie.

Avantageusement lors de la sous-étape de choix initial 112, la longueur du renfort 8 est sensiblement égale à la longueur de l'organe de liaison 6, la modification de la forme de renfort 8 à tester consistant en un allongement de la longueur du renfort 8.

L'étape de fourniture 110 d'un panneau peut ensuite être mise en œuvre une fois les formes et positions des renforts 8 déterminés pour chaque organe de fixation 6. L'assemblage du renfort 8 avec la bordure 4 peut être réalisé de diverses façons adaptées. Par exemple, le renfort 8 est assemblé au corps 2 du panneau 1 par vissage ou rivetage ou tout autre moyen de fixation mécanique. En variante, le renfort 8 est surmoulé au corps 2 ou collé au corps 2. En variante, la bordure 4 en thermoplastique est réalisée par surmoulage sur le renfort 8.

Du fait, de cette position et de cette forme déterminées, les contraintes subies par les organes de liaison 6 sont principalement transmises au renfort 8 associé plutôt qu'à la partie de la bordure 4 au voisinage de l'organe de liaison 6.

La présente invention permet de fournir un panneau 1 de hayon de véhicule en limitant la masse du panneau 1 tout en conservant de bonnes caractéristiques structurelles.

La dimension et la forme du renfort 8 sont adaptées pour réduire au maximum la masse, tout en limitant les contraintes dues aux efforts de poussée des équipements ainsi que tous les efforts subis par le hayon lors d'une situation de vie du hayon, dans la bordure 4 en thermoplastique.

Les contraintes mécaniques sont bien réparties autour des renforts 8. Les contraintes mécaniques des organes de liaison 6 sont transmises par le renfort 8 et non dissipée dans la matière thermoplastique. Ceci évite une casse de la matière thermoplastique.

Le test par la norme ECE R11 effectué jusqu'à trouver une forme de panneau adéquate permet que la zone de contraintes mécaniques maximales 26 ne soit plus une zone dans laquelle le thermoplastique risquerait de se fracturer notamment lors d'un choc à grande vitesse. La zone de contraintes mécaniques maximales 26 est située entre les deux éléments de fixation 24, 38 dans la bordure 4, mais en raison de la dissipation dans le renfort 8, les contraintes maximales dans la zone reste inférieur à un seuil de rupture du thermoplastique. Les éléments additionnels de fixation 38 participent aussi à la répartition des contraintes.

La masse cumulée des renforts 8 pour chaque organe de liaison 6 est très inférieure à la masse qu'aurait un renfort monobloc fixé aux différents organes de liaison 6. En outre, les dimensions réduites des renforts 8 facilitent leur intégration dans le corps 2 du panneau 1. De plus, de tels renforts 8 de dimensions réduites permettent le passage des faisceaux électriques dans les montants latéraux 14. Enfin, les renforts 8 étant plus petits, leur coûts sont également réduits.

On notera que l'invention n'est pas limitée aux modes de réalisation précédemment décrits, mais pourrait présenter diverses variantes sans sortir du cadre des revendications.

## Revendications

1. Procédé de fabrication d'un panneau (1) d'un hayon de véhicule, comprenant les étapes suivantes:
- fourniture d'un panneau (1) comprenant :
- un corps (2) délimité à sa périphérie par une bordure (4), la bordure (4) du corps (2) étant réalisée en matière thermoplastique,
- une pluralité d'organes de liaison (6) fixés à la bordure (4) et destinés à être fixés au véhicule,
- une pluralité de renforts (8), chaque renfort (8) étant fixé à la bordure (4) et à un organe de liaison (6) associé à une position déterminée, le panneau (1) comprenant un renfort (8) différent pour chaque organe de liaison (6), les renforts (8) de la pluralité de renforts étant séparés les uns des autres par une zone non renforcée de la bordure (4),
pour chaque organe de liaison (6), le procédé comprenant les étapes suivantes :
- détermination d'une zone de contraintes mécaniques maximales (26) engendrées dans la bordure (4) au voisinage de l'organe de liaison (6) lors d'au moins une situation de vie du hayon du véhicule, et détermination de la forme et de la position du renfort (8) en fonction de la zone de contraintes mécaniques maximales (26) déterminée, tel que le renfort (8) traverse la zone de contraintes mécaniques maximales (26), l'étape de détermination de la zone de contraintes mécaniques maximales (26) et de détermination de la forme et de la position du renfort (8) comprenant les sous-étapes suivantes :
- choix initial d'une forme et d'une position de renfort (8) à tester,
- test de contrainte permettant à partir de la forme et de la position de renfort (8) à tester de déterminer une zone de contraintes mécaniques maximales (26) engendrées dans la bordure (4) au voisinage de l'organe de liaison (6) lors d'au moins une situation de vie du hayon de véhicule,
- vérification du résultat à l'issu de l'étape de test de contrainte, lors de l'étape de vérification :
- si à l'issu de l'étape de test de contrainte, la zone de contraintes mécaniques maximales (26) déterminée ne présente pas de fissure, de casse, ou de fatigue supérieure à un seuil de fatigue prédéterminé la forme et la position de renfort (8) à tester est validée,
- si à l'issu de l'étape de test de contrainte, la zone de contraintes mécaniques maximales (26) présente une fissure, une casse, ou une fatigue supérieure à un seuil de fatigue prédéterminé, la forme et la position de renfort (8) à tester est modifiée,
la sous-étape de test de contrainte et la sous-étape de vérification du résultat étant itérée tant que la forme et la position de renfort (8) à tester n'est pas validée.

2. Procédé selon la revendication 1, dans lequel la situation de vie du hayon du véhicule est choisie dans le groupe constitué par un freinage du véhicule, un claquage du hayon, un surclaquage du hayon, un choc du véhicule à petite vitesse, un choc du véhicule à grande vitesse, un effort de poussée d'un joint d'étanchéité du hayon, un effort de poussée d'un équilibreur du hayon, un effort de poussée de la serrure du hayon, un effort de torsion du hayon, un effort de flexion du hayon, un effort de coup de vent, un effort sur le hayon lors de montage de composants constitutifs du hayon lorsque celui-ci est déjà monté sur le véhicule en position ouverte, et une sollicitation du hayon décrite dans la norme ECE R11.

3. Procédé selon l'une la revendication 1 ou 2, dans lequel la détermination d'une zone de contraintes mécaniques maximales (26) lors d'une situation de vie du hayon est effectuée par des tests décrits dans la norme ECE R11.

4. Procédé selon l'une quelconque des revendications 1 à 3, dans lequel chaque organe de liaison (6) est une charnière de liaison (20) du hayon au véhicule, une rotule d'équilibreur (22) du hayon du véhicule ou un dispositif d'accrochage (23) d'une serrure.

5. Procédé selon l'une quelconque des revendications 1 à 4, dans lequel chaque renfort (8) est fixé à l'organe de liaison (6) par un élément principal de fixation (24), chaque renfort (8) étant fixé à la bordure (4) par l'élément principal de fixation (24) et par un élément additionnel de fixation (38), l'élément principal de fixation (24) et l'élément additionnel de fixation (38) étant disposés de part et d'autre de la zone de contraintes mécaniques maximales (26).

6. Procédé selon la revendication 5, dans lequel la zone de contraintes mécaniques maximales (26) déterminée s'étend à une distance inférieure à 500 mm de l'élément de fixation principal (24).

7. Procédé selon l'une quelconque des revendications 1 à 6, dans lequel une partie de la bordure (4) est interposée entre chaque renfort (8) et l'organe de liaison (6) associé.

8. Procédé selon l'une quelconque des revendications 1 à 7 dans lequel la bordure (4) présente la forme d'un cadre, la zone de contraintes mécaniques maximales (26) déterminée étant située dans un angle (18) du cadre et le renfort (8) présentant une forme coudée.

9. Procédé selon la revendication 8, dans lequel lors de la sous-étape de choix initial, la longueur du renfort (8) est sensiblement égale à la longueur de l'organe de liaison (6), la modification de la forme de renfort (8) à tester consistant en un allongement de la longueur du renfort (8).

10. Panneau (1) d'un hayon de véhicule automobile comportant :
- un corps (2) délimité à sa périphérie par une bordure (4), la bordure (4) du corps (2) étant réalisée en matière thermoplastique,
- une pluralité d'organes de liaison (6) fixés à la bordure (4) et destinés à être fixés au véhicule,
- une pluralité de renforts (8), chaque renfort (8) étant fixé à la bordure (4) et à un organe de liaison (6) associé à une position déterminée, le panneau (1) comprenant un renfort (8) différent pour chaque organe de liaison (6), les renforts (8) de la pluralité de renforts étant séparés les uns des autres par une zone non renforcée de la bordure (4),pour chaque renfort (8), la forme et de la position de ce renfort (8) sont telles que ce renfort (8) traverse une zone de contraintes mécaniques maximales (26) engendrées dans la bordure (4) au voisinage de l'organe de liaison (6) lors d'au moins une situation de vie du hayon de véhicule, chaque renfort (8) étant fixé à l'organe de liaison (6) par un élément principal de fixation (24), chaque renfort (8) étant fixé à la bordure (4) par l'élément principal de fixation (24) et par un élément additionnel de fixation (38), l'élément principal de fixation (24) et l'élément additionnel de fixation (38) étant disposés de part et d'autre de la zone de contraintes mécaniques maximales (26).

## Patentansprüche

1. Verfahren zur Herstellung einer Platte (1) einer Fahrzeugheckklappe, umfassend die folgenden Schritte:
- Liefern einer Platte (1), umfassend:
- einen Körper (2), der an seinem Umfang durch einen Rand (4) begrenzt ist, wobei der Rand (4) des Körpers (2) aus thermoplastischem Material hergestellt ist,
- eine Vielzahl von Verbindungsorganen (6), die an den Rand (4) befestigt und ausgelegt sind, um an das Fahrzeug befestigt zu werden,
- eine Vielzahl von Verstärkungen (8), wobei jede Verstärkung (8) an den Rand (4) und an ein Verbindungsorgan (6), das mit einer bestimmten Position assoziiert ist, befestigt ist, wobei die Platte (1) eine Verstärkung (8) umfasst, die verschieden für jedes Verbindungsorgan (6) ist, wobei die Verstärkungen (8) der Vielzahl von Verstärkungen voneinander durch eine nicht verstärkte Zone des Rands (4) getrennt sind,
wobei bei jedem Verbindungsorgan (6) das Verfahren die folgenden Schritte umfasst:
- Bestimmen einer Zone mit maximalen mechanischen Spannungen (26), die im Rand (4) benachbart dem Verbindungsorgan (6) in mindestens einer Situation der Lebensdauer der Fahrzeugheckklappe erzeugt werden, und Bestimmen der Form und der Position der Verstärkung (8) je nach der bestimmten Zone von maximalen mechanischen Spannungen (26), so dass die Verstärkung (8) die Zone von maximalen mechanischen Spannungen (26) quert,
wobei der Schritt des Bestimmens der Zone mit maximalen mechanischen Spannungen (26) und des Bestimmens der Form und der Position der Verstärkung (8) die folgenden Unterschritte umfasst:
- anfängliche Wahl einer Form und einer Position der Verstärkung (8), die getestet werden soll,
- Spannungstesten, das ermöglicht, ausgehend von der Form und der Position der Verstärkung (8) die getestet werden soll, eine Zone mit maximalen mechanischen Spannungen (26) zu bestimmen, die im Rand (4) benachbart dem Verbindungsorgan (6) in mindestens einer Situation der Lebensdauer der Fahrzeugheckklappe erzeugt wird,
- Überprüfen des Ergebnisses am Ausgang des Schritts des Spannungstestens beim Schritt des Überprüfens:
- wenn am Ausgang des Schritts des Spannungstestens die bestimmte Zone mit maximalen mechanischen Spannungen (26) keinen Riss, keinen Bruch oder keine Ermüdung über der vorbestimmten Ermüdungsschwelle aufweist, ist die zu testende Form und Position der Verstärkung (8) validiert,
- wenn am Ausgang des Schritts des Spannungstestens die Zone mit maximalen mechanischen Spannungen (26) einen Riss, einen Bruch oder eine Ermüdung über einer vorbestimmten Ermüdungsschwelle aufweist, ist die zu testende Form und Position der Verstärkung (8) modifiziert,
wobei der Unterschritt des Spannungstestens und der Unterschritt des Überprüfens des Ergebnisses so oft wiederholt wird, dass die zu testende Form und Position der Verstärkung (8) nicht validiert wird.

2. Verfahren nach Anspruch 1, wobei die Situation der Lebensdauer der Fahrzeugheckklappe ausgewählt ist aus der Gruppe, bestehend aus einer Bremsung des Fahrzeugs, einem Zuschlagen der Heckklappe, einem übermäßigen Zuschlagen der Heckklappe, einem Aufprall des Fahrzeugs bei geringer Geschwindigkeit, einem Aufprall des Fahrzeugs bei hoher Geschwindigkeit, einer Druckkraft einer Dichtung der Heckklappe, einer Druckkraft eines Stabilisators der Heckklappe, einer Druckkraft des Schlosses der Heckklappe, einer Torsionskraft der Heckklappe, einer Flexionskraft der Heckklappe, einer Windstoßkraft, einer Kraft auf die Heckklappe bei der Montage der Bestandteile der Heckklappe, wenn diese bereits auf das Fahrzeug in der offenen Position montiert ist, und einer Beanspruchung der Heckklappe, beschrieben in der Norm ECE R11.

3. Verfahren nach einem der Ansprüche 1 oder 2, wobei das Bestimmen einer Zone mit maximalen mechanischen Spannungen (26) bei einer Situation der Lebensdauer der Heckklappe durch die in der Norm ECE R11 beschriebenen Tests durchgeführt wird.

4. Verfahren nach einem der Ansprüche 1 bis 3, wobei jedes Verbindungsorgan (6) ein Verbindungsscharnier (20) der Heckklappe an das Fahrzeug, ein Kugelgelenk des Stabilisators (22) der Heckklappe des Fahrzeugs oder eine Verankerungsvorrichtung (23) eines Schlosses ist.

5. Verfahren nach einem der Ansprüche 1 bis 4, wobei jede Verstärkung (8) an das Verbindungsorgan (6) durch ein Hauptbefestigungselement (24) befestigt ist, wobei jede Verstärkung (8) an den Rand (4) durch das Hauptbefestigungselement (24) und durch ein zusätzliches Befestigungselement (38) befestigt ist, wobei das Hauptbefestigungselement (24) und das zusätzliche Befestigungselement (38) auf beiden Seiten der Zone mit maximalen mechanischen Spannungen (26) angeordnet sind.

6. Verfahren nach Anspruch 5, wobei sich die bestimmte Zone mit maximalen mechanischen Spannungen (26) in einem Abstand von weniger als 500 mm vom Hauptbefestigungselement (24) erstreckt.

7. Verfahren nach einem der Ansprüche 1 bis 6, wobei ein Teil des Rands (4) zwischen jede Verstärkung (8) und das zugewiesene Verbindungsorgan (6) gelegt ist.

8. Verfahren nach einem der Ansprüche 1 bis 7, wobei der Rand (4) die Form eines Rahmens aufweist, wobei sich die bestimmte Zone mit maximalen mechanischen Spannungen (26) in einem Winkel (18) des Rahmens befindet und die Verstärkung (8) eine gewinkelte Form aufweist.

9. Verfahren nach Anspruch 8, wobei beim Unterschritt des anfänglichen Wählens die Länge der Verstärkung (8) im Wesentlichen gleich der Länge des Verbindungsorgans (6) ist, wobei die Modifizierung der Verstärkungsform (8), die getestet werden soll, aus einer Verlängerung der Länge der Verstärkung (8) besteht.

10. Platte (1) einer Kraftfahrzeugheckklappe, umfassend
- einen Körper (2), der an seinem Umfang durch einen Rand (4) begrenzt ist, wobei der Rand (4) des Körpers (2) aus thermoplastischem Material hergestellt ist,
- eine Vielzahl von Verbindungsorganen (6), die an den Rand (4) befestigt und ausgelegt sind, um an das Fahrzeug befestigt zu werden,
- eine Vielzahl von Verstärkungen (8), wobei jede Verstärkung (8) an den Rand (4) und an ein Verbindungsorgan (6), das mit einer bestimmten Position assoziiert ist, befestigt ist, wobei die Platte (1) eine Verstärkung (8) umfasst, die verschieden für jedes Verbindungsorgan (6) ist, wobei die Verstärkungen (8) der Vielzahl von Verstärkungen voneinander durch einen nicht verstärkten Bereich des Rands (4) für jede Verstärkung (8) getrennt sind, wobei die Form und die Position dieser Verstärkung (8) derart sind, dass diese Verstärkung (8) eine Zone mit maximalen mechanischen Spannungen (26) quert, die im Rand (4) benachbart dem Verbindungsorgan (6) in mindestens einer Situation der Lebensdauer der Fahrzeugheckklappe erzeugt werden,
wobei jede Verstärkung (8) an das Verbindungsorgan (6) durch ein Hauptbefestigungselement (24) befestigt ist, wobei jede Verstärkung (8) an den Rand (4) durch das Hauptbefestigungselement (24) und durch ein zusätzliches Befestigungselement (38) befestigt ist, wobei das Hauptbefestigungselement (24) und das zusätzliche Befestigungselement (38) auf beiden Seiten der Zone mit maximalen mechanischen Spannungen (26) angeordnet sind.

## Claims

1. A method for manufacturing a panel (1) of a vehicle tailgate, comprising the following steps:
- providing of a panel (1) comprising:
- a body (2) delimited at its periphery by an edge (4), the edge (4) of the body (2) being made from a thermoplastic material,
- a plurality of connecting members (6) fastened to the edge (4) and intended to be fastened to the vehicle,
- a plurality of reinforcements (8), each reinforcement (8) being fastened to the edge (4) and to a connecting member (6) associated with a determined position, the panel (1) comprising a different reinforcement (8) for each connecting member (6), the reinforcements (8) of the plurality of reinforcements being separated from one another by an unreinforced area of the edge (4),
for each connecting member (6), the method comprising the following steps:
- determining an area of maximal mechanical stress (26) created in the edge (4) near the connecting member (6) during at least one operating condition of the tailgate of the vehicle, and determining the shape and the position of the reinforcement (8) based on the determined area of maximal mechanical stress (26), such that the reinforcement (8) passes through the area of maximal mechanical stress (26),
the step for determining the area of maximal mechanical stress (26) and determining the shape and the position of the reinforcement (8) comprising the following sub-steps:
- initial choice of a shape and a position of reinforcement (8) to be tested,
- stress test making it possible, from the shape and the position of reinforcement (8) to be tested, to determine an area of maximal mechanical stress (26) created in the edge (4) near the connecting member (6) during at least one operating condition of the vehicle,
- verifying the result at the end of the stress test step, during the verification step:
- if, at the end of the stress test step, the determined area of maximal mechanical stress (26) does not exhibit cracking, breaking, or fatigue above a predetermined fatigue threshold, the shape and the position of reinforcement (8) to be tested is validated,
- if, at the end of the stress test step, the area of maximal mechanical stress (26) exhibits cracking, breaking, or fatigue above a predetermined fatigue threshold, the shape, and the position of reinforcement (8) to be tested is modified,
the stress test sub-step and the result verification sub-step being iterated as long as the shape and the position of reinforcement (8) to be tested is not validated.

2. The method according to claim 1, wherein the operating condition of the tailgate of the vehicle is chosen from the group made up of braking of the vehicle, breakdown of the tailgate, overslam of the tailgate, a low-speed impact of the vehicle, a high-speed impact of the vehicle, a thrust force of a sealing gasket of the tailgate, a thrust force of a stabilizer of the tailgate, a thrust force of the lock of the tailgate, a torsion force of the tailgate, a bending force of the tailgate, a gust force, a force on the tailgate when mounting component elements of the tailgate when the latter is already mounted on the vehicle in the open position, and a stress on the tailgate described in standard ECE R11.

3. The method according to one of claims 1 or 2, wherein the determination of an area of maximal mechanical stress (26) during an operating condition of the tailgate is done by tests described in standard ECE R11.

4. The method according to any one of claims 1 to 3, wherein each connecting member (6) is a connecting hinge (20) connecting the tailgate to the vehicle, a ball joint (22) of the tailgate of the vehicle or an attachment device (23) of a lock.

5. The method according to any one of claims 1 to 4, wherein each reinforcement (8) is fastened to the connecting member (6) by a main fastening element (24), each reinforcement (8) being fastened to the edge (4) by the main fastening element (24) and by an additional fastening element (38), the main fastening element (24) and the additional fastening element (38) being arranged on either side of the area of maximal mechanical stress (26).

6. The method according to claim 5, wherein the determined area of maximal mechanical stress (26) extends at a distance of less than 500 mm from the main fastening element (24).

7. The method according to any one of claims 1 to 6, wherein part of the edge (4) is inserted between each reinforcement (8) and the associated connecting member (6).

8. The method according to any one of claims 1 to 7, wherein the edge (4) is in the form of a frame, the determined area of maximal mechanical stress (26) being located in a corner (18) of the frame and the reinforcement (8) having a bent shape.

9. The method according to claim 8, wherein during the initial selection sub-step, the length of the reinforcement (8) is substantially equal to the length of the connecting member (6), the modification of the shape of the reinforcement (8) to be tested consisting in an elongation of the length of the reinforcement (8).

10. A panel (1) of a motor vehicle tailgate, including:
- a body (2) delimited at its periphery by an edge (4), the edge (4) of the body (2) being made from a thermoplastic material,
- a plurality of connecting members (6) fastened to the edge (4) and intended to be fastened to the vehicle,
- a plurality of reinforcements (8), each reinforcement (8) being fastened to the edge (4) and to a connecting member (6) associated with a determined position, the panel (1) comprising a different reinforcement (8) for each connecting member (6), the reinforcements (8) of the plurality of reinforcements being separated from one another by an unreinforced area of the edge (4), for each reinforcement (8), the shape and the position of this reinforcement (8) are such that this reinforcement (8) passes through an area of maximal mechanical stress (26) created in the edge (4) near the connecting member (6) during at least one operating condition of the vehicle tailgate,
each reinforcement (8) being fastened to the connecting member (6) by a main fastening element (24), each reinforcement (8) being fastened to the edge (4) by the main fastening element (24) and by an additional fastening element (38), the main fastening element (24) and the additional fastening element (38) being arranged on either side of the area of maximal mechanical stress (26).
